# EUROPEAN PATENT APPLICATION

(11) **EP 2 530 050 A1**
(43) Date of publication of application: **05.12.2012**
(21) Application number: 11168722.4
(22) Date of filing: 03.06.2011
(51) Int. Cl.: C01B 31/36, C01B 33/025

(54) **Starting materials for production of solar grade silicon feedstock**

(71) Applicant: Evonik Solar Norge AS, 7041 Trondheim (NO)
(72) Inventor: Nygaard, Lars, 7563 MALVIK (NO); Andresen, Birger, 7036 TRONDHEIM (NO); Christiansen, Stein, 7022 TRONDHEIM (NO)
(74) Representative: Bendele, Tanja

(57) **Abstract**

There is provided a method of providing a first and a second starting material for a carbothermic reduction process, comprising the steps of:
a) preparing a quartz product containing 0.5 ppm (w/w) or less boron and 1 ppm (w/w) or less phosphorus from natural quartz;
b) providing part of said quartz product as the first starting material;
c) reacting part of the quartz product with a carbon material, such as carbon black, containing 0.5 ppm (w/w) or less boron and 0.4 ppm (w/w) or less phosphorus to produce a silicon carbide product containing 1.5 ppm (w/w) or less boron and 3.0 ppm (w/w) or less phosphorus;
d) providing said silicon carbide product as the second starting material.
A agglomerated composition comprising the quartz product and the silicon carbide product is also provided.

## Description

### Technical field

The present disclosure relates to the field of production of silicon to be used as feedstock for production of solar cell wafers. In particular, it relates to the careful selection and preparation of starting materials for such production.

### Background

There is a growing demand for solar cell panels, partly due to the concerns about global warming. Accordingly, there is also a growing demand for a cost-effective and environmentally friendly (i.e. energy-efficient) production of silicon feedstock to the solar cell industry.

There are several ways of producing silicon. Among these are:
A chemical method involving acid treatment of metallurgical silicon followed by a gas phase reaction with HCl and gas phase decomposition on silicon rods with hydrogen. This chemical method, known as the Siemens Process, consumes high amounts of energy and is thus expensive.
A physical purification method involving refining semi-pure liquid silicon with slag and gas followed by solidification. The solid product is crushed and Fe, Al, Ca and Ti are leached out. The product is then re-melted and subjected to directional solidification. This method is used by the Elkem company.
In a third method, pure quartz is subjected to carbothermic reduction to obtain a silicon liquid, which may be treated by the following steps; gas refining, temperature adjustment, settling, filtering, skimming and directional solidification. A challenge using this method is to produce a silicon product of sufficient purity.

### Summary

The inventors have realized that a method based on a carbothermic reduction of quartz followed by refining in the liquid state is a promising alternative for the production of solar grade silicon. Compared to the physical purification method described above, fewer impurities are removed after the carbothermic reduction in this method. Instead, the inventors have chosen to use starting materials of higher purity. Thus, a silicon product having the characteristics demanded by the solar cell producers may be obtained by a few relatively uncomplicated and energy-efficient refining steps in the liquid state following the carbothermic reduction.

The inventors have further realized that in such refining steps, it is particularly difficult to remove boron and phosphorus by metallurgical refining methods. Thus, it is particularly important that the starting materials are selected and prepared to reach low enough levels of these elements.

Thus, there is provided method of providing a first and a second starting material for a carbothermic reduction process, comprising the steps of:
a) preparing a quartz product containing 0.5 ppm (w/w) or less boron and 1 ppm (w/w) or less phosphorus from natural quartz;
b) providing part of said quartz product as the first starting material for the carbothermic reduction process;
c) reacting part of the quartz product with a carbon material, such as carbon black, containing 0.5 ppm (w/w) or less boron and 1.0 ppm (w/w) or less phosphorus to produce a silicon carbide product containing 1.5 ppm (w/w) or less boron and 3.0 ppm (w/w) or less phosphorus;
d) providing said silicon carbide product as the second starting material for the carbothermic reduction process.

Some of the starting materials are used in such small particle sizes in order to reach the required purity, that they are preferably agglomerated by pelletizing or briquetting to avoid significant losses when charged to the reduction furnace.

Thus, there is provided a composition comprising the quartz product and the silicon carbide product as defined above, characterized in that the composition is agglomerated.

### Brief description of the figures

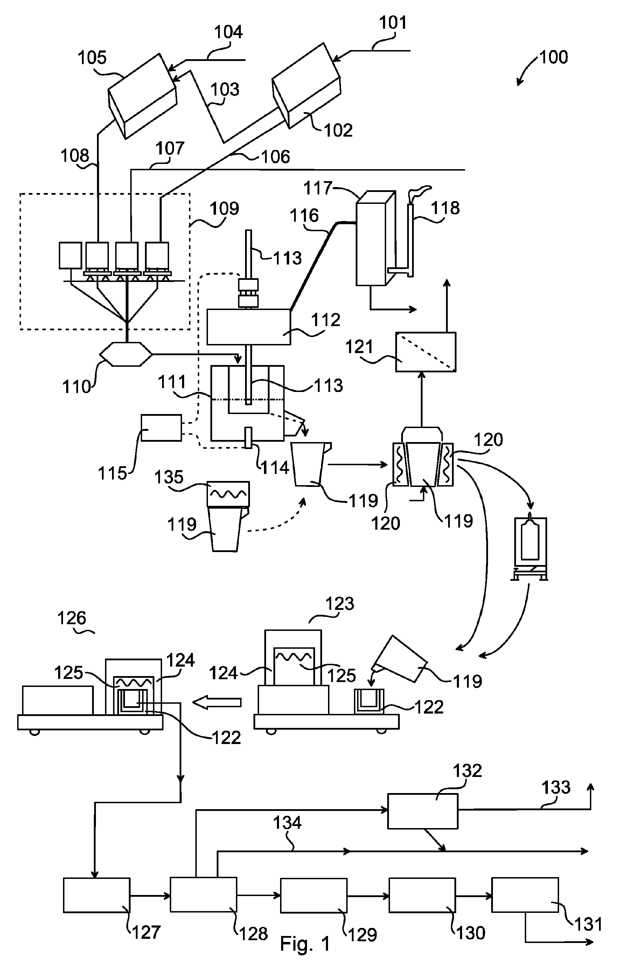

Figure 1 shows an embodiment of a system for producing solar grade silicon.

### Detailed description

As a first aspect of the present disclosure, there is thus provided a method of providing a first and a second starting material for a carbothermic reduction process, comprising the steps of:
a) preparing a quartz product containing 0.5 ppm (w/w) or less boron and 1 ppm (w/w) or less phosphorus from natural quartz;
b) providing part of said quartz product as the first starting material;
c) reacting part of the quartz product with a carbon material, such as carbon black, containing 0.5 ppm (w/w) or less boron and 1.0 ppm (w/w) or less phosphorus to produce a silicon carbide product containing 1.5 ppm (w/w) or less boron and 3.0 ppm (w/w) or less phosphorus;
d) providing said silicon carbide product as the second starting material.

The provided starting materials may be mixed to form a mixture. The weight ratio of the quartz product to the silicon carbide product in such a mixture may be 1-1.2:1, such as 1.05-1.15:1, such as about 1.1:1.

While starting material particles coarser than 2-3 mm are preferably charged directly into the reduction furnace, finer sized particles are preferably used as a raw material in the silicon carbide process or agglomerated before the carbothermic reduction process. The mixture may thus be agglomerated according to the second aspect presented below. The agglomeration process may for example be pelletizing and/or briquetting.

The reduction agent, carbon, may not only be provided as silicon carbide in the carbothermic reduction process. Some of the carbon may also be provided in unreacted form, i.e. as the carbon material described above. Thus, in one embodiment, carbon material of the same quality as that of step c) may be provided as an additional starting material, e.g. as part of agglomerates.

The total carbon/oxygen ratio by weight in the starting materials/mixture may for example be equal to or less than 0.75.

The starting materials/mixture may be subjected to heating in a carbothermic reduction reaction to produce a liquid silicon product. For example, the starting materials/mixture may be heated to at least 1800°C, such as to about 2000°C.

The liquid silicon may subsequently be filtered (e.g. to remove remaining carbides) and/or refined by gas extraction, e.g. with chlorine gas, optionally combined with an inert gas, such as argon. Such extraction removes aluminum (Al), calcium (Ca) and other elements capable of forming salts or slag with the chlorine gas under the prevailing conditions. Boron (B) and phosphorus (P) are not such elements. The gas extraction may be followed by refinement by directional solidification. In the directional solidification, Iron (Fe), Al and other metals having a low distribution coefficient are separated from the solidifying silicon since they have a higher solubility in the melt. However, the distribution coefficients of B and P are relatively high. The table below shows the result of a refinement of a silicon melt by directional solidification.

| Element | Before directional solidification (ppm (w/w)) | After directional solidification, in the center of the ingot (ppm (w/w)) | Removed by segregation |
|---|---|---|---|
| B | 0.45 | 0.425 | 6 % |
| P | 1 | 0.545 | 46 % |
| Al | 250 | 1.75 | 99 % |
| Fe | 160 | <0.05 | <99.97 % |
| Cu | 1.4 | 0.03 | 98 % |
| Ge | 0.58 | 0.58 | 0 % |
| Na | 0.1 | 0.02 | 80 % |

To compensate for the inefficient removal of B and P in the refining steps described above, starting materials having low levels of the elements in question are prepared. The inventors have chosen the upper limits of B and P in the method of the first aspect accordingly.

In the downstream processing of silicon produced by the carbothermic reduction process, silicon residues may be obtained. For example, the solid silicon ingot obtained from the directional solidification is normally cut to remove a layer from each side because the outer layers normally comprise higher levels of contaminants. Kerfs or swarf from wafer sawing are other examples of silicon residues generated during the downstream processing.

In order to increase the overall yield in the process, the silicon residues may be recycled. Thus, in one embodiment, recycled silicon material is provided as an additional starting material. The bottom layers and lateral layers cut from the ingots as well as the kerfs/swarf are thus examples of such an additional starting material. The removed top layer may however comprise such high levels of contaminants that it is inappropriate to reuse it the carbothermic reduction reaction. The removed layers and kerfs/swarf may be cleaned before being recycled, e.g. by one or more dressing methods.

Step a) of the method may for example comprise at least one of crushing, screening, milling, optical sorting, magnet separation, gravimetric separation, flotation and acidic treatment. In one embodiment, at least two, such as at least three, such as at least four, such as at least five, such as at least six, such as at least seven, of the sub-steps are performed. Also, all of the sub-steps may be performed.

The purpose of the crushing and milling is to obtain smaller pieces of the quartz and thus expose impurities. Sometimes, the quartz is however already crushed to appropriately sized pieces when delivered to a site where the above method is carried out.

The quartz may be split into different fractions by the substep of screening, and over-sized particles may be returned to the substep of crushing and/or the substep of milling.

The screening may also separate different size fractions to dedicated process steps.

In the optical sorting, visible impurities may be detected. Some impurities may for example be detected as dark spots in the quartz or discolored particles and the pieces containing such dark spots or the discolored particles may be removed. Thus, pieces of crushed natural quartz may be transported through a device for optical sorting on a transport arrangement, such as a conveyor belt. When a piece having an impurity is detected, it may be removed from the transport arrangement, e.g. by blowing compressed air at the piece or by a mechanical arrangement. The removed impure particles may be further crushed and optically sorted again to increase the quartz yield.

In the magnet separation, a magnet, preferably an electric magnet, is employed for separating magnetic material, such as iron-containing minerals. Thus, pieces of crushed quartz, e.g. from the sub-step of crushing or the substep of optical sorting, may be transported through a device for magnet separation on a transport arrangement, such as a conveyor belt. Pieces containing a sufficient amount of iron-containing minerals are removed from the transport arrangement by a force generated by a magnetic field. Strongly magnetic minerals, such as magnetite, franklinite, and pyrrhotite, can be removed by low-intensity magnetic separators. A high-intensity device can also separate minerals with weaker magnetic properties, such as oxide iron ores, e.g. limonite and siderite, as well as iron-bearing manganese, titanium, and tungsten ores and iron-bearing silicates.

In the flotation, several minerals with surface properties deviating from quartz can be removed by adding selected flotation agents.

In the gravimetric separation, a mineral with a density deviating from that of quartz can be removed, for example by immersing the crushed quartz in a liquid that has a density in-between those for the quartz and the mineral.

In the acidic treatment, some acid soluble minerals can be removed after being dissolved in a solution of an acid like sulfuric acid, hydrochloride acid, nitric acid and/or hydrofluoric acid. The selection of acid(s), concentration, temperature and processing time are adapted for each specific combination of minerals it is necessary to remove.

In conclusion, the low levels of contaminants in the quartz product are the result of the selected quartz raw material and the selected preparation step(s).

Step a) may require milling of the quartz to fine fractions to make it possible to remove unwanted minerals as liberated particles. Quartz and other materials finer than 2 or 3 mm in average diameter is preferably agglomerated before being charged to the reduction furnace or used as a raw material in the silicon carbide process because otherwise they may blow out of the furnace with the process gases. Step a) may also give quartz pebbles having an average diameter of 3-25 mm that are clean enough to be charged directly into the reduction furnace. Particles coarser than 25 mm may be heated too slowly. Thus, they may not be sufficiently preheated when they reach a high-temperature zone under the electrode in the reduction furnace and as a result, the silicon yield in the process may be reduced.

To aid the aggregation and to improve the strength of the agglomerates, a binder may be added to the fine silica material. Various examples of such a binder, as well as further components that may be part of the agglomerates, are discussed below.

The quartz product obtained from step a) contains 0.5 ppm (w/w) or less boron and 1.0 ppm (w/w) or less phosphorus. Preferably, it contains 0.25 ppm (w/w) or less boron and 0.5 ppm (w/w) or less phosphorus. Further, the quartz product obtained from step a) may for example contain 300 ppm (w/w) or less, such as 250 ppm (w/w) or less, aluminum and/or 60 ppm (w/w) or less, such as 40 ppm (w/w) or less, iron. In one embodiment, the sum of all metal impurities in the quartz product obtained from step a) is 500 ppm (w/w) or less, such as 400 ppm (w/w) or less, such as 300 ppm (w/w) or less.

The inventors have realized that carbon black derived from natural gas is best suited for step c). This is because such carbon black may be obtained at a economically viable price and has a high purity. The carbon material used in step c) contains 0.5 ppm (w/w) or less boron, 1.0 ppm (w/w) or less phosphorus. Preferably it contains 0.30 ppm (w/w) or less boron, 0.6 ppm (w/w) or less phosphorus, 5 ppm (w/w) or less aluminum and/or 2 ppm (w/w) or less iron. In one embodiment, it contains 0.20 ppm (w/w) or less boron and 0.3 ppm (w/w) or less phosphorus.

The carbon material may be used both in agglomerates as a starting material for the carbothermic reduction process and for the production of pure silicon carbide.

The silicon carbide product obtained from step c) contains 1.5 ppm (w/w) or less boron and 3.0 ppm (w/w) or less phosphorus. Preferably, it contains 1.0 ppm (w/w) or less, such as 0.75 ppm (w/w) or less, such as 0.5 ppm (w/w) or less, boron. Further, it preferably contains 2.0 ppm (w/w) or less, such as 1.2 ppm (w/w) or less, such as 0.8 ppm (w/w) or less, phosphorus. The silicon carbide may be produced in a rotating plasma heated furnace, such as the one developed at SINTEF in Trondheim, Norway. The use of the normal Acheson silicon carbide process is less preferred as it may contaminate the silicon carbide, but it is proved that a modified Acheson process may give a silicon carbide of sufficient purity.

The average diameter of the silicon carbide provided as a starting material, or any agglomerate of which it is part, is preferably 2-25 mm for the same reasons as discussed above. Most preferred is an average diameter of 10-15 mm.

The starting materials for the carbothermic reduction may be premixed in appropriate proportions. Thus, the step of charging the starting materials may be simplified. Further, such a starting materials mixture may provide for easier handling and more efficient logistics, in particular if they are agglomerated, e.g. pelletized. Thus, as a second aspect of the present disclosure, there is provided an agglomerated, such as pelletized, composition comprising the quartz product and the silicon carbide product according to the first aspect. Thus, various embodiments of the second aspect are described above in connection with the first aspect. The agglomerated composition may be referred to as agglomerates and the pelletized composition may be referred to as pellets.

In the second aspect, the weight ratio of the quartz product to the silicon carbide product may for example be 1.0-1.2:1.0, such as 1.05-1.15, such as about 1.1:1.0.

The provision of homogeneous agglomerates makes it possible to adjust the carbon/oxygen ratio to match the dynamically changing silicon yield in the reduction process.

The agglomerated composition of the second aspect may for example comprise a binder.

The binder of the present disclosure may for example be carbohydrates composed of carbon, oxygen and hydrogen. Examples of such carbohydrates are purified mono-, di- or polysaccharides of biological origin.

Most oxygen and hydrogen in the carbohydrate binders will react to form gaseous compounds before the carbothermic reduction takes place while some of the carbon normally will take part in the reduction process. Other binders composed of the same three elements, such as alcohols and other hydrocarbons, may provide the same benefit. Resins may also be used as the binder.

Water and/or silica fume (sometimes referred to as microsilica) may be added to the composition to aid the aggregation and improve the strength of the agglomerates. The water is preferably purified, such as de-ionized, to prevent contamination. The water normally separates from the agglomerate before the reduction process starts. The silica fume may for example be filtered out of flue gases from the carbothermic reduction process (see figure 1, 117). The silica fume fills the spaces between the individual pieces/particles in the mix that is agglomerated. The silica fume may have a surface area of at least 5000 m²/kg, such as at least 10000 m²/kg. The surface are may be measured by a nitrogen adsorption technique. The binder may for example constitute 1-10 % (w/w), such as 2-10 % (w/w), such as 4-8 % (w/w) of the silica agglomerates. Further, the water may for example constitute 2-10 % (w/w), such as 4-8 % (w/w) of the silica agglomerates. Still further, the silica fume may for example constitute 1-20 %, such as 1-10 % (w/w), such as 2-8 % (w/w) or 3-7 % (w/w), of the agglomerates.

The average diameter of the agglomerates of the present disclosure may for example be 10-20 mm, such as 10-15 mm.

A functional arrangement for drying and hardening of agglomerates may be a part of an agglomeration plant.

The individual solid components may for example be provided in the agglomerated composition as powders having an average particle sizes below 0.3 mm.

The agglomerates of the present disclosure may for example be pellets or briquettes.

As a third aspect of the present disclosure, there is provided a use of the agglomerated composition of the second aspect for the production of silicon. Various embodiments of the third aspect are thus described above in connection with the first and the second aspect.

### Examples

An exemplary system for production of solar cell-grade silicon is described below with reference to figure 1.

A natural quartz having low levels of contaminants, in particular boron and phosphorus, is selected. The selected natural quartz 101 is added to a quartz processing plant 102, in which the natural quartz undergoes one or more of the steps of crushing, screening, milling, optical sorting, magnet separation, gravimetric separation, flotation and acidic treatment. Optical sorting comprises optical detection of impurities in the natural quartz. For example, the impurities may be visible as dark spots. Further, the optical sorting may comprise the removal of the pieces of material on which such spots have been detected by means of compressed air. That is, such pieces may be blown off a transport belt, such as a conveyor belt or the like. The acidic treatment may comprise dissolving and removing impurities. In the flotation pieces of material having different physiochemical surface properties than quartz are separated. The magnet separation comprises the removal of pieces of material containing magnetic minerals.

Some of the quartz 103 from the quartz processing plant 102 is added to a silicon carbide production plant 105, to which carbon black 104 of high purity is also added. Such carbon black may for example be derived from natural gas.

The same type of processed quartz 106 from the quartz processing plant 102 is added, together with recycled silicon metal 107 from downstream positions in the system and silicon carbide 108 from the silicon carbide production plant 105, to an arrangement for weighing and mixing 109. The appropriately mixed material is then added to a reduction furnace/reaction vessel 111 by means of charging equipment 110.

Alternatively, powders of the silicon carbide 108 and the processed quartz 106 may be mixed to form a composition that is pelletized and added to the reduction furnace/reaction vessel 111. Additives aiding the aggregation of the components of the pellets may also be used in such a composition.

The weight ratio of quartz to silicon carbide in the material added to the reduction furnace 111 is about 1.1:1.

A smoke hood 112 is arranged above the reduction furnace 111 to collect gases formed during the reduction process. The collected gases are routed, via a duct 116, to a device for flue gas filtering and dust treatment 117. The device 117 comprises a chimney 118 through which the purified gases are expelled.

Silica fume may be separated from the device for flue gas filtering and dust treatment 117 and added to the composition to be pelletized to facilitate aggregation.

A first electrode 113, preferably composed of graphite, is arranged to extend into the reduction furnace 111 from above. A second electrode 114, also preferably composed of graphite, is arranged in the bottom of the reduction furnace. The first 113 and the second 114 electrode are connected to a power source 115, such as a DC power source, for generating an electric arc that heats the carbothermic reduction process. The silicon melt formed in the reduction furnace 114 is tapped through a tapping zone of the reduction furnace 114 into a ladle 119, which has been preheated by a ladle preheating device 135. During the tapping, an inert gas, such as argon, may be bubbled through the ladle to stir the silicon melt therein. Material may be continuously added to the reduction furnace 111.

The filled ladle 119 is moved to an arrangement for chlorine refining, during which chlorine gas, optionally together with an inert gas, such as argon, is bubbled through the liquid silicon in the ladle 119 to react with impurities, such as aluminum or calcium, to form chloride salts, e.g. AlCl₃ and CaCl₂. When the chlorides subsequently get in contact with air, the corresponding oxides are formed instead. Also, chlorine gas is formed again. The gases are then purified in a gas cleaning system 121. The arrangement for chlorine refining preferably comprises means for heating 120, such as inductive heating, of the liquid silicon. This is to ensure that the silicon remains liquid during the process.

The refined silicon melt is then, optionally after filtering, added to a preferably preheated crucible 122 on a device for directional solidification in filling position 123. The refined silicon may also be stored in an induction furnace or holding furnace for some time before being added to the preheated crucible 122. The device comprises a furnace 124 having heating elements 125. When the crucible 122 has been filled, the device for directional solidification is set to its processing position 126, in which the crucible 122 is placed in the furnace 124. During the processing, the crucible 122 is cooled from below to generate a bottom-up solidification, which results in a concentration of impurities in the top layer of the formed solid silicon ingot.

The crucible 122 is then removed from the ingot in a crucible removal step 127. This normally involves breaking the crucible 122 to release the ingot. The ingot is then cut to remove the outermost layer of its sides and bottom as well as the impurities-containing top layer in an ingot cutting step 128. The ingot may then be subjected to the steps of etching and washing 129, packing 130 and storage 131, before it is transported to a customer, which may recrystallize the ingot and then cut it to wafers for the production of solar cell panels.

All or some of the side and bottom layers removed in the ingot cutting step 128 are recycled to the process, preferably to the arrangement for weighing and mixing 109, after a step of milling, sandblasting and/or crushing 132. The top layer from the ingot cutting step 128 is wasted to prevent accumulation of impurities in the system 100. The milling, sandblasting and/or crushing step 132 also produces some waste.

## Claims

1. A method of providing a first and a second starting material for a carbothermic reduction process, comprising the steps of:
a) preparing a quartz product containing 0.5 ppm (w/w) or less boron and 1 ppm (w/w) or less phosphorus from natural quartz;
b) providing part of said quartz product as the first starting material;
c) reacting part of the quartz product with a carbon material, such as carbon black, containing 0.5 ppm (w/w) or less boron and 1.0 ppm (w/w) or less phosphorus to produce a silicon carbide product containing 1.5 ppm (w/w) or less boron and 3.0 ppm (w/w) or less phosphorus;
d) providing said silicon carbide product as the second starting material.

2. The method according to claim 1, wherein the quartz product contains less than 300 ppm (w/w) aluminum and/or less than 60 ppm (w/w) iron.

3. The method according to claim 1 or 2, wherein the sum of all metal impurities in the quartz product is less than 500 ppm (w/w).

4. The method according to any one of claims 1-3, wherein step a) comprises at least one, such as at least two, three, four or five of crushing, milling, screening, optical sorting, magnet separation, gravimetric separation, flotation and/or acidic treatment of the natural quartz.

5. The method according to any one of claims 1-4, wherein the carbon material is carbon black derived from natural gas.

6. The method according to any one of claims 1-5, wherein the carbon material contains less than 5 ppm (w/w) aluminum and/or less than 5 ppm (w/w) iron.

7. The method according to any one of claims 1-6, further comprising the provision of the carbon material and/or recycled silicon material, such as silicon kerfs or swarf, as (an) additional starting material(s).

8. A composition comprising the quartz product and the silicon carbide product as defined in any one of claims 1-6, **characterized in that** the composition is agglomerated, such as pelletized.

9. An agglomerated composition according to claim 7, wherein the carbon/oxygen ratio by weight is equal to or less than 0.66.

10. An agglomerated composition according to claim 8 or 9, wherein the weight ratio of the quartz product to the silicon carbide product is 1.0-1.2:1.0.

11. An agglomerated composition according to anyone of claims 8-10 further comprising a binder, such as a carbohydrate, a resin, an alcohol or another hydrocarbon.

12. An agglomerated composition according to claim 11, wherein the binder constitutes 1-10 % (w/w) of the composition.

13. An agglomerated composition according to any one of claims 8-12 further comprising 2-10 % (w/w) of purified water.

14. An agglomerated composition according to any one of claims 8-13 further comprising 1-20 % (w/w) of a silica fume.

15. An agglomerated composition according to any one of claims 8-14, wherein the average diameter of the agglomerates is 2-20 mm.
